# EUROPEAN PATENT APPLICATION

(11) **EP 1 277 679 A1**
(43) Date of publication of application: **22.01.2003**
(21) Application number: 02102007.8
(22) Date of filing: 05.07.2002
(51) Int. Cl.: B65G 59/02

(54) **Apparatus for and method of unstacking a stack of elongated profiles**

(30) Priority: 16.07.2001 NL 1018548
(71) Applicant: Machinefabriek Roerstreek B.V., 6040 KB Roermond (NL)
(72) Inventor: Scholten, Engbert Rudolf Frederik, 6040 KB Roermond (NL)
(74) Representative: Smeets, Eugenius Theodorus J. M.

(57) **Abstract**

The invention relates to an apparatus (10) for unstacking a layered stack (2) of elongate profiles (3), in particular made of wood. The apparatus (10) has a main frame (4) and a side frame (8), the latter comprising a lifting device (8) for the stack (2) to be unstacked and comprising means (8A) by which a layer (2A) of the stack (2) can be brought onto a work surface (6) located within the main frame (4). The main frame (4) is provided with first shifting means (5) by which the layer (2A) can be moved over the work surface (6) in a first direction perpendicular to the longitudinal axes of the profiles (3) and with second shifting means (7) by which one or several profiles (3) can be moved from the layer (2A) parallel to their longitudinal axes.

According to the invention, the side frame (8) with the lifting device (8) is located within the main frame (4) and below the work surface (6), as seen in projection, while the means (8A) for moving the layer (2A) from the stack (2) onto the work surface (6) comprise the lifting device (8). In a preferred embodiment, the apparatus (10) comprises transport means (9) by which the stack (2) can be moved from outside the main frame (4) to inside said frame (4) and above the lifting device (8).

## Description

The invention relates to an apparatus for unstacking a layered stack of elongate profiles, comprising a main frame and a side frame which comprises a lifting device for the stack to be unstacked and is provided with means by which a layer of the stack can be brought onto a work surface located within the main frame, which main frame is provided with first shifting means by which the layer can be moved onto the work surface in a first direction which is substantially perpendicular to the longitudinal direction of the profiles and with second shifting means by which one or several profiles can be moved from the layer in a second direction which is substantially parallel to the longitudinal direction of the profiles. The invention also relates to a wood processing machine fitted with such an apparatus and to a method of unstacking a stack.

Such an apparatus offers an attractive alternative to manual unstacking of a stack. This is because the unstacking takes place quickly and efficiently, but first and foremost because manual unstacking is a time-consuming job which imposes a repetitive strain on the person who unstacks, and accordingly threatens his health. Legal restrictions are imposed on such manual labour in an increasing number of countries for this reason.

An apparatus of the kind mentioned in the opening paragraph is known from a German patent document published under no. DE 2 323 227 on November 14^{th}, 1974. An unstacking device for a stack of elongate wood profiles is shown and described therein. The apparatus has a main frame comprising a work surface on which a single layer from a stack is deposited. One or several profiles are moved from the stack in longitudinal direction of the profiles over the work surface by a first pushing member at an end of the layer adjacent an abutment. The profiles are thereby passed into a wood processing machine for further treatment or processing. A second pushing member pushes the remaining portion of the layer in the direction of the abutment, whereupon again one or several profiles are moved from the layer into the wood processing machine by the first pushing member. This process is repeated until the entire stack has been processed. Next to the main frame there is a side frame which contains the stack to be unstacked, which stack is present in a lift which lies partly recessed into the floor. The lift is moved up each time until the lower side of the upper layer of the stack lies flush with the work surface. A third pushing member then moves the upper layer of the stack onto the work surface whenever the previous layer has been processed. This goes on until the entire stack has been unstacked and processed.

It is a disadvantage of the known apparatus that it is comparatively complicated, and thus expensive, and that it occupies comparatively much space.

It is accordingly an object of the present invention to provide an apparatus which does not have the above disadvantage, or at least to a much lesser degree, and which is accordingly simple, inexpensive, and compact.

According to the invention, an apparatus of the kind mentioned in the opening paragraph is for this purpose characterised in that the side frame with the lifting device is located within the main frame and, seen in projection, below the work surface, and the means by which the stack is brought onto the work surface comprise the lifting device. The invention is based on the recognition first of all that the function of the work surface may be taken over by the upper surface of the second layer from the top of the stack or, if there are separating planks between the layers, the upper surface of the separating planks. This means that the lift with the stack to be unstacked thereon can be placed under the work surface, and that this work surface itself becomes unnecessary. This makes the apparatus more compact and less expensive. The requirements imposed on the lift and its operation can be readily complied with, in as far as they are different from those in the known apparatus. A major additional advantage is that the third pushing member and its operation are redundant in an apparatus according to the invention. This, too, renders the apparatus simpler and less expensive.

In a preferred embodiment of the apparatus according to the invention, further means are present therein capable of bringing the stack to be unstacked from a first position which is located outside the work surface, as seen in projection, into a second position which is located above the lifting device, as seen in projection. The apparatus can be easily loaded as a result while it can still be compact. If the further means are long enough, moreover, a further stack may be placed thereon, so that the apparatus can be easily and quickly reloaded after unstacking of the stack. Preferably, the further means comprise a chain track or a rolling track. A chain track comprises preferably two chains. The lifting device may thus be located between these chains, whereby a compact, satisfactorily operating embodiment of the apparatus is obtained. In a very favourable modification the further means comprise a rolling track. It comprises preferably two parts whereby a first part of the rolling track is positioned on the lifting device and a second part, separate from the first part, is positioned next to the lifting device.

In a particularly favourable modification, the first and the second shifting means each comprise a chain track, to which tracks a first and a second pushing member, respectively, are coupled. The first chain track preferably comprises two chains which are located on either side of the work surface on which a layer of the stack is present. The second chain track preferably comprises a single chain, while preferably the second pushing member is at the same time a lifting member. The latter arrangement facilitates the displacement of one or more layers from the stack, also and especially if the layers of the stack are separated from one another by separating planks. The latter may be removed in the same manner as in the known apparatus after the processing of each layer. Preferably, however, the separating planks are removed by hand, this being a less frequently required and in any case comparatively light job. The same is true for the removal from the apparatus of any pallet on which the stack to be unstacked may be present.

In a major embodiment, the apparatus has an angle section at an outer side of the work surface, which section forms an abutment against shifting of the profiles in the first direction and along which section the movement of the profiles in the second direction takes place. Processing of a single layer of the stack lying on the work surface is made easier and more reliable thereby. In a particularly favourable modification, a surface of the angle section lying in the plane of the work surface is constructed with a downward curving edge. Processing is made even easier and more reliable thereby. Particularly favourable results were obtained with a downward curvature having a radius of curvature of at least two centimeters. In a further favourable modification, the apparatus comprises detection means capable of ascertaining that the upper layer of the stack is present at the level of the work surface. This also contributes to a reliable operation of the unstacking process.

Preferably, the lifting device comprises a linkage mechanism which is placed on the lower surface of the main frame. Given suitable dimensions of the stack to be unstacked, the lifting device need not be recessed in the base in that case, also because a linkage mechanism can be particularly compact. A displacement of the entire apparatus, should this be desired, may also be readily achieved without special measures as a result of this. The lifting device and the shifting means are preferably each provided with an electromechanical drive. The drive of the lifting device also comprises a hydraulic part. The apparatus is preferably provided with electronics by means of which its operation is wholly or partly automated.

The apparatus according to the invention is particularly suitable for unstacking a stack of wood profiles and is preferably coupled to a wood processing machine, for example for the manufacture of pallets.

A method of unstacking a layered stack of elongate profiles, whereby a layer from said stack is brought onto a work surface, whereupon said layer is shifted over the work surface in a first direction which is substantially perpendicular to the longitudinal direction of the profiles, and one or several profiles are moved from the layer in a second direction which is substantially parallel to the longitudinal direction of the profiles, and whereby the stack, after the uppermost layer has been moved from the stack onto the work surface, is lifted by a lifting device, is characterised in that, according to the invention, the lifting device is located under the work surface, as seen in projection, and in that the placement of the uppermost layer of the stack on the work surface is achieved by lifting of the stack by means of the lifting device. A stack is unstacked in a simple and compact manner thereby.

Preferably, the stack is displaced by transport means from a first position outside the work surface, as seen in projection, into a second position above the lifting device and below the work surface, as seen in projection. This has the advantages discussed above with reference to the apparatus according to the invention. The same is true for a further favourable modification in which a further stack is placed in the first position on the transport means after the stack has been moved to above the lifting device by the transport means. The layers are preferably separated from one another within the stack to be unstacked by means of separating planks whose longitudinal axes are perpendicular to those of the profiles. Preferably, the profiles are (slightly) lifted at the end where they are pushed while they are being moved from the layer.

The invention will now be explained in more detail below with reference to an embodiment shown in the drawing, to which, however, the invention is not limited. In the drawing:
Fig. 1 diagrammatically and in perspective view shows a preferred embodiment of the apparatus for unstacking a stack according to the invention during its operation,
Fig. 2 diagrammatically and in perspective view shows the apparatus of Fig. 1, but not in operation and viewed from a direction indicated with II in Fig. 1,
Fig. 3 shows the apparatus of Fig. 1 in a side elevation from a direction III in Fig. 1,
Fig. 4 shows the apparatus of Fig. 1 in a side elevation from a direction IV in Fig. 1,
Fig. 5 diagrammatically and in perspective view shows a part of the apparatus of Fig. 1 indicated with V in Figs. 1 and 2.

The drawings are diagrammatic and drawn on a scale of approximately 1 : 45. Corresponding parts have been given the same reference numerals as much as possible.

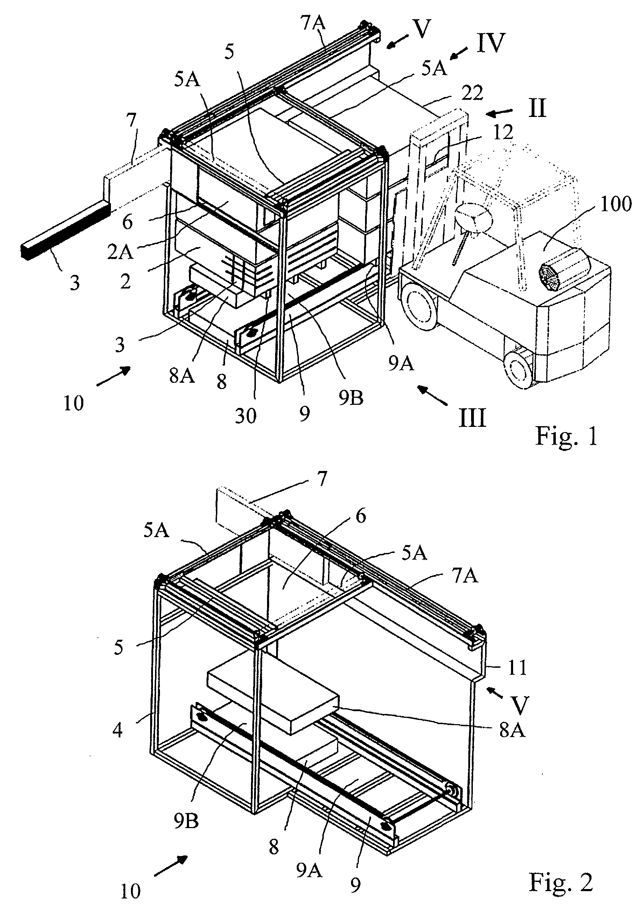

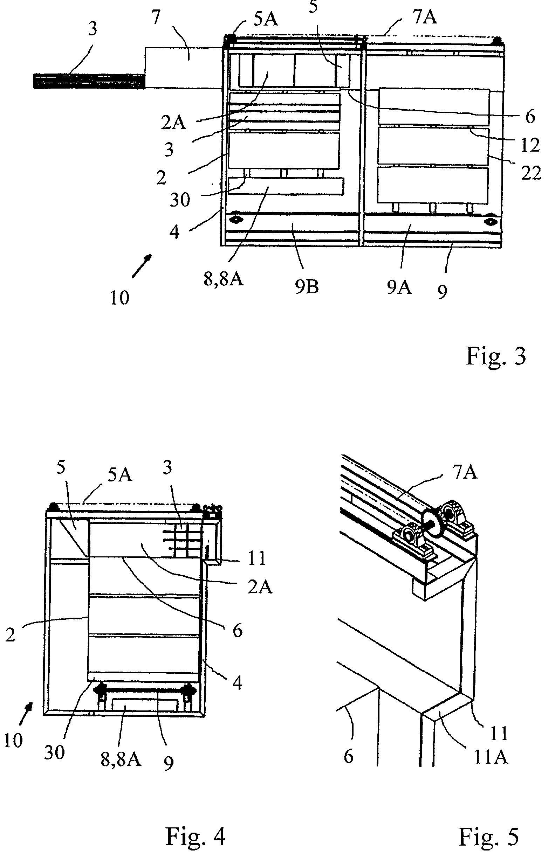

Fig. 1 diagrammatically and in perspective view shows a preferred embodiment of an apparatus for unstacking a stack according to the invention during its operation, and Fig. 2 shows the apparatus of Fig. 1 while not in operation and viewed from a direction indicated with II in Fig. 1. Figs. 3 to 5 show the apparatus of Fig. 1 viewed in elevations indicated with III, IV, and V in Fig. 1, respectively.

The apparatus 10 (see Fig. 1, for example) comprises a main frame 4 and a side frame 8 which comprises a lifting device 8, a linkage mechanism 8 in this case, on which a layered stack 2 of elongate profiles 3, of wood in this case, is present, which stack 2 is to be unstacked. The orientation of the profiles 3 is summarily indicated in the drawing, i.e. in the bottom layer of the stack 2 in Fig. 1, in the central layer in Fig. 2, and in the upper layer in Fig. 3. The apparatus 10 is provided with means 8A in the form of a lifting device 8 by which a layer 2A of the stack 2 can be brought onto a work surface 6 situated within the main frame 4. The main frame 4 is provided with first shifting means 5 by which the layer 2A can be moved over the work surface 6 in a first direction which is substantially perpendicular to the longitudinal direction of the profiles 3 and with second shifting means by which one or several of the profiles 3 can be moved from the layer 2A in a second direction which is substantially parallel to the longitudinal direction of the profiles 3. Since the side frame 8 lies within the main frame 4 and, seen in projection, below the work surface 6, the apparatus 10 according to the invention is simple in its operation and at the same time particularly compact. The upper surface of the layer directly below the layer 2A of the stack 2 acts as the work surface or, as in this example, the upper surface of the separating planks 12. The dimensions of the main frame 4 in this example are approximately 1.5 x 1.5 x 1.5 m³, the stack 2 has dimensions which are approximately 0.25 m smaller, and the wood profiles 3 are 100 mm wide, 25 mm thick, and approximately 1,200 mm long here. A layer 2A is approximately 400 mm high and accordingly comprises sets of 16 profiles stacked on top of one another.

In this example, the apparatus 10 comprises further means 9 by which the stack 2 to be unstacked can be moved from a first position 9A located outside the work surface 6, as seen in projection, into a second position 9B above the lifting device 8, as seen in projection. The apparatus 10 remains comparatively compact as a result of this and can be easily loaded. Provided the length of the further means 9 is chosen to be sufficiently great, as in the present case, i.e. approximately 3 m, a second stack can in addition be placed on the further means 9. This enables the apparatus 10 to unstack semi-continuously, which enhances its effectiveness. The further means 9 here comprise a chain track 9 with two chains which are arranged on either side of the lifting device 8.

The first shifting means 5 in this example are advantageously similarly constructed as a first chain track 5A with two chains which are arranged on either side of the work surface 6 and which are coupled to a first pushing member 5. The second shifting means 7 comprise a second chain track 7A with a single chain which is coupled to a second pushing member 7 which, as in the present example, preferably at the same time acts as a lifting member 7. The latter is readily realised in that the lower side of the pushing member 7 is provided with a wedge-shaped scooping portion.

In this example, the apparatus 10 is provided with an angle section 11 at an outer side of the work surface 6, which section forms an abutment against shifting of the profiles 3 in the first direction and along which section the displacement of the profiles 3 in the second direction takes place. The surface 11A of the angle section 11 located in the plane of the work surface 6 has a downward curving edge. This facilitates the movement of the layer 2A against the angle section 11, also if the work surface should not be perfectly planar owing to the thickness of the layer situated below the layer 2A or, as in the present case, of the separating planks not being fully uniform. A possible maladjustment of the layer 2A owing to an incorrectly reproducing vertical adjustment of the lifting device 8 is also largely compensated thereby. The best results are obtained if the downward curvature of the surface 11A of the section 11 has a radius of curvature of at least 2 cm.

To promote a good vertical adjustment of the layer 2A, the apparatus is provided with detection means (not shown) here, whereby it can be ascertained that the upper layer 2A of the stack 2 is at the level of the work surface 6. Said means comprise a lamp and a photosensitive detector located at a distance from the lamp and connected to a suitable electronic circuit. The latter is connected in its turn to the electronics that control the operation of the linkage mechanism 8. The linkage mechanism 8 is placed on the same base surface on which the main frame is placed, it may be fastened to the latter, and is it provided with a hydraulic drive (not shown). The chain tracks 5A, 7A, and 9 are each provided with a drive (not shown) comprising an electric motor here. The various drives are coupled to an electronic control unit comprising, for example, a PLC (Programmable Logic Control) unit.

The apparatus 10 in this example is particularly suitable for unstacking stacks 2 of wood profiles 3. The apparatus 10 is accordingly coupled to a wood processing machine (not shown) such as a machine for making wooden pallets. This will then be present where a stack of wood profiles is shown in Fig. 1 after their delivery from the apparatus by means of the pushing member 7.

The apparatus 10 described above is operated as follows by a method according to the invention. First (see Fig. 1) a stack 2 of wood profiles 3 present on a pallet 30 is placed on the transport means 9 by a fork lift truck 100. Said means then move the stack to above the lifting device 8. The fork lift truck may now move a second stack 22 onto the transport means 9, so that the apparatus 10 can be operated semi-continuously. The stack 2 is lifted by the linkage mechanism 8 so far that the upper layer 2A is on the work surface 6. The layer 2A is subsequently moved against the angle section 11 by the pushing member 5. Then the pushing member 7 moves the set of profiles 3 lying against the angle section 11 along the angle section 11, during which this set is also slightly raised.

This process of unstacking of the layer 2A by the pushing members 5, 7 is repeated until the entire layer 2A has been used up. The separating planks 12 lying on top of the layer below the layer 2A are now removed from the stack 2, by hand in this case. The stack 2 is lifted by the linkage mechanism 8 such that the layer lying under the layer 2A of the stack comes to lie on the work surface 6. The unstacking is repeated for the next highest layer of the stack 2 in the same way as described above for the layer 2A. The entire stack 2 is thus unstacked and processed in the wood processing machine for the manufacture of pallets. Subsequently, the stack 22 is moved to above the lifting device 8, after the latter has been moved into its bottom position again, and the second stack 22 is unstacked in an identical manner.

Although the invention was described above with a certain degree of precision, it will be obvious that various modifications as to shape and detail may be applied without departing from the scope of the invention as defined hereinafter in the claims.

Thus materials other than wood may be chosen for the profiles, such as metal or synthetic resins. The profiles may also have dimensions other than those in the example. The orientation of the profiles within the stack may be different. The profiles may in particular be stacked differently within a layer: instead of a number of stacked sets next to one another, the profiles may be turned through 90 degrees and be all arranged next to one another. If different orientations are used in consecutive layers of the stack, for example in that the longitudinal direction of the profiles in each layer is at right angles to the longitudinal direction of the profiles in the two adjoining layers, a lift capable of rotation may advantageously be used. The lift may for this purpose be fastened, for example, on a turntable.

It is finally noted that the apparatus as shown in the drawing may alternatively be of a mirrored construction, for example mirrored with respect to the plane in which the second shifting means are located. Two apparatuses may then be placed side by side, so that a single processing machine may be readily and advantageously supplied with two profiles next to one another or with two sets of profiles next to one another.

## Claims

1. An apparatus (10) for unstacking a layered stack (2) of elongate profiles (3), comprising a main frame (4) and a side frame (8) which comprises a lifting device (8) for the stack (2) to be unstacked and is provided with means (8A) by which a layer (2A) of the stack (2) can be brought onto a work surface (6) located within the main frame (4), which main frame (4) is provided with first shifting means (5) by which the layer (2A) can be moved onto the work surface (6) in a first direction which is substantially perpendicular to the longitudinal direction of the profiles (3) and with second shifting means (7) by which one or several profiles (3) can be moved from the layer (2A) in a second direction which is substantially parallel to the longitudinal direction of the profiles (3), **characterised in that** the side frame (8) with the lifting device (8) is located within the main frame (4) and, seen in projection, below the work surface (6), and the means (8A) by which the stack (2A) is brought onto the work surface (6) comprise the lifting device (8).

2. An apparatus (10) as claimed in claim 1, **characterised in that** the apparatus (10) comprises further means (9) capable of bringing the stack (2) to be unstacked from a first position (9A) which is located outside the work surface (6), as seen in projection, into a second position (9B) which is located above the lifting device (8), as seen in projection.

3. An apparatus (10) as claimed in claim 2, **characterised in that** the further means (9) comprise a chain track (9) or a rolling track on which a further stack (22) may be placed in the first position (9A) after the stack (2) has been moved into the second position (9B).

4. An apparatus (10) as claimed in claim 1, 2, or 3, **characterised in that** the first shifting means (5) comprise a first chain track (5A) with two chains which are located on either side of the work surface (6) and which are coupled to a first pushing member (5), and the second shifting means (7) comprise a second chain track (7A) with a single chain which is coupled to a second pushing member (7) which preferably also constitutes a lifting member (7).

5. An apparatus (10) as claimed in any one of the preceding claims, **characterised in that** the apparatus (10) is provided with an angle section (11) at an outer side of the work surface (6), which section (11) forms an abutment against shifting of the profiles (3) in the first direction and along which section (11) the movement of the profiles (3) in the second direction takes place.

6. An apparatus (10) as claimed in claim 5, **characterised in that** the surface (11A) of the angle section (11) lying in the work surface (6) is constructed so as to have a downward curving edge.

7. An apparatus (10) as claimed in any one of the preceding claims, **characterised in that** the apparatus is provided with detection means by which it can be ascertained that the upper layer (2A) of the stack (2) is at the level of the work surface (6), and **in that** the lifting device (8) and the first and the second shifting means (5, 7) are each provided with an electromechanical drive.

8. An apparatus (10) as claimed in any one of the preceding claims, **characterised in that** the lifting device (8) comprises a linkage mechanism (8) which is placed on the base surface of the main frame (4).

9. An apparatus (10) as claimed in any one of the preceding claims, **characterised in that** the apparatus (10) is designed for unstacking a stack (2) of wood profiles (3).

10. A wood processing machine provided with an apparatus (10) as claimed in any one of the preceding claims.

11. A method of unstacking a layered stack (2) of elongate profiles (3), whereby a layer (2A) from said stack (2) is brought onto a work surface (6), whereupon said layer (2A) is shifted over the work surface (6) in a first direction which is substantially perpendicular to the longitudinal direction of the profiles (3), and one or several profiles (3) are moved from the layer (2A) in a second direction which is substantially parallel to the longitudinal direction of the profiles (3), and whereby the stack (2), after the uppermost layer (2A) has been moved from the stack (2) onto the work surface (6), is lifted by a lifting device (8), **characterised in that** the lifting device (8) is located under the work surface (6), as seen in projection, and **in that** the placement of the uppermost layer (2A) of the stack (2) on the work surface (6) is achieved by lifting of the stack (2) by means of the lifting device (8).

12. A method as claimed in claim 11, **characterised in that** the stack (2) is moved by transport means (9) from a first position (9A) which is located outside the work surface (6), as seen in projection, into a second position (9B) which is located above the lifting device (8) and below the work surface (6), as seen in projection.

13. A method as claimed in claim 12, **characterised in that** a further stack (22) can be placed in the first position (9A) on the transport means (9) after the stack (2) has been positioned above the lifting device (8) by the transport means (9).

14. A method as claimed in claim 11, 12, or 13, **characterised in that** the layers (2A) of the stack (2) are mutually separated within the stack (2) by means of separating planks (12) whose longitudinal direction is substantially perpendicular to the longitudinal direction of the profiles (3).

15. A method as claimed in claim 11, 12, 13, or 14, **characterised in that** the profiles (3) are lifted at the side where they are to be pushed before being pushed from the layer (2A).
